# EUROPEAN PATENT APPLICATION

(11) **EP 1 375 910 A1**
(43) Date of publication of application: **02.01.2004**
(21) Application number: 03253433.1
(22) Date of filing: 31.05.2003
(51) Int. Cl.: F03B 17/06, F03B 13/26

(54) **Fluid flow turbines**

(30) Priority: 26.06.2002 GB 0214691; 12.11.2002 GB 0226305
(71) Applicant: Western Hydro Limited, Helston, Cornwall TR12 6TQ (GB)
(72) Inventor: Goodden, John Jason Paul, Helston, Cornwall, TR12 6TQ (GB); Tabor, Gavin Randall, Exeter, EX4 /BB (GB); Abbott, Peter, Farnborough, Hampshire GU14 8PU (GB)
(74) Representative: Brown, Michael Stanley

(57) **Abstract**

A fluid flow turbine includes a rotor (5) and a first vane (1) having at least a part thereof positioned in front of the rotor (5) and having a tail extending towards the axis of the rotor (5). The first vane (1) serves to direct the fluid so as to flow to one side of the axis of the rotor (5), and a second vane (2) is positioned on the other side of the rotor (5).

## Description

### Field of the Invention

This invention relates to fluid flow turbines and is concerned with the extraction of energy from a flowing fluid medium, such as water, using a turbine rotor positioned in spiral vortices that are generated in the wake of passive objects held stationary in the flow. The invention is specifically concerned with means designed to enhance and stabilise the vortices. The invention is also concerned with fluid flow turbines that can be used where the flow reverses its direction, as with tidal stream currents in any estuary.

It has long been understood that, when an object such as a pillar is held stationary within a flowing medium with its long axis substantially perpendicular to the direction of flow, the pillar disrupts the flow and forces the fluid to divide into accelerated streams passing on either side of the pillar. If the section of the pillar on the downstream side is blunt in shape, the boundary layer of fluid adjacent to the surface of the pillar can become separated from the surface of the pillar and become stalled on the downstream side of the pillar causing what is commonly known as an eddying wake behind the pillar.

Within the eddying wake, a back-flow can occur in a direction counter to the direction of the free stream fluid flow, and this back-flow is generated by pressure differentials between the higher fluid pressure downstream of the pillar and the lower pressure in the vicinity of the shoulders of the pillar, where the fluid has been caused to accelerate as it passes the lateral extremities of the pillar. This flow regime can cause spiralling patterns of flow, known as vortices, in the wake of the pillar, with the vortices rotating in opposite directions on either side of the pillar.

A rotor having its axis of rotation disposed substantially parallel to the long axis of the pillar and perpendicular to the direction of flow can be positioned so that one side of the rotor resides in the accelerated flow while the other side of the rotor is within the eddying wake produced by the pillar where the flow is either reduced or counter to the free stream flow direction. With this arrangement, the flow regime in the vicinity of the rotor induces a turning moment to produce rotation of the rotor.

Attempts have previously been made to use the vortices to turn rotors suspended from a pillar or other abutment with the axes of the rotors at the centres of formation of the vortices. The vortices have, however, been weak and unstable, being prone to spin away from the axes of rotation of the rotors, in a process known as vortex shedding.

It is an object of the present invention to provide improved means for extracting energy from a flowing fluid medium.

It is a more specific object of the present invention to provide a fluid flow turbine that includes means for enhancing, stabilising and trapping the vortices in the vicinity of the rotor.

### Summary of the Invention

According to the present invention there is provided a fluid flow turbine that includes a rotor, a first vane having at least a part thereof positioned in front of the rotor and having a tail extending towards the axis of the rotor and serving to direct the fluid so as to flow to one side of the axis of the rotor, and a second vane positioned on the other side of the rotor.

The second vane preferably extends downstream of the rotor and said second vane is preferably so positioned that there is only a small gap between the periphery of the rotor and the part of the second vane closest to the rotor.

The first and second vanes are preferably arranged so that they co-operate with the rotor to define flow passages designed to transmit the pressure differentials generated by the vanes to different parts of the rotor in order to enhance the turning moment acting on the rotor and trap the generated vortex within the vicinity of the rotor.

The fluid flow turbine may include just two vanes.

The fluid flow turbine may alternatively include a plurality of vanes so arranged relative to the rotor that, regardless of the direction of flow past the rotor, the fluid pressure upstream of the rotor is increased and the pressure downstream of the rotor is decreased, the flow upstream of the rotor being substantially wholly through one zone or channel whereas the flow downstream of the rotor is through two zones or channels, again regardless of the direction of flow past the rotor.

The plurality of vanes may be so arranged relative to the rotor as to afford a plane of symmetry perpendicular to the flow direction such that, when the flow direction is reversed, the vanes continue to generate substantially the same flow pattern and velocity gradient in the reverse direction and such that the turning moment on the rotor is in the same direction as before.

### Brief Description of the Drawings

Figures 1A and 1B are isometric views of a single rotor fluid flow turbine designed to operate in fluid flowing in substantially one direction, Figure 1B having the top and bottom plates removed to expose a passage and slot between two vanes that are so shaped as to control the flow and pressure fields acting on the rotor,
Figure 2 is a horizontal sectional view of the single rotor fluid flow turbine of Figures 1A and 1B, showing the direction of the free-stream fluid flow of the medium, as indicated by the arrows in Figure 2,
Figure 3 is a sectional view similar to Figure 2, but showing a modification of the single rotor fluid flow turbine of Figures 1A and 1B, the modification including a lead vane that is extended laterally on the opposite side to the rotor and downstream of the rotor to form a passage linking the downstream pressure domain to the back side of the rotor,
Figure 4 is an isometric view of a fluid flow turbine that includes four vanes, with the two additional vanes so arranged that the turbine will operate in situations in which the direction of flow of the fluid medium reverses, the top plate being removed to show the passages between the vanes, and
Figure 5 is a sectional view if the reversible fluid flow turbine of Figure 4, with the alternative flow directions indicated by the arrows.

### Description of the Preferred Embodiments

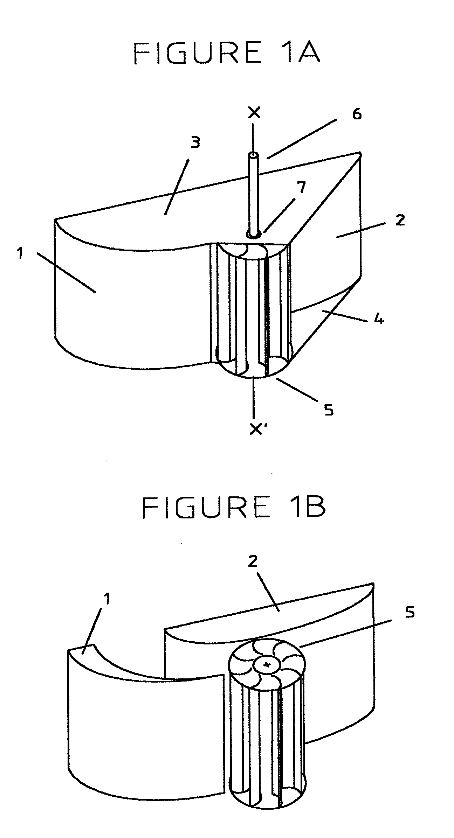

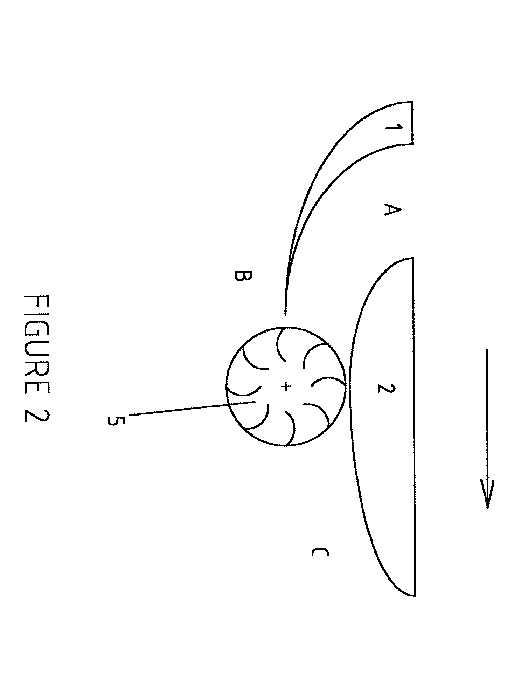

Figures 1A and 1B and Figure 2 show a turbine that includes two solid vanes 1 and 2 joined together by a top plate 3 and a bottom plate 4. A rotor 5 is supported by bearings 7 mounted on plates 3 and 4 so that the rotor 5 is free to rotate about a vertical axis X-X'. The whole assembly is held stationary within a fluid flowing from left to right as indicated by the arrow in Figure 2. A shaft 6 extending upwardly from the rotor 5 transmits the power to a generator, which can be above the surface of the water if the turbine is being used as a water current turbine.

The fluid divides at the most upstream extent of vane 1 such that part of the flow passes area B and the rotor 5, while the remainder of the flow passes on the other side of vane 1, past the gap A between the vanes 1 and 2. As can be seen from Figure 2, the vane 1 has curvate surfaces that approach one another so that the vane 1 tapers and effectively forms a tail arranged in line with the axis of rotation of the rotor 5.

In the vicinity of the area B, the fluid flow becomes accelerated while, within the area C, downstream of the rotor 5, the flow becomes stalled in the wake of the vane 1 and the rotor 5. As the fluid passes the gap A between the vanes 1 and 2, it is also accelerated, causing a pressure drop in the vicinity of area A. Since the passage between the gap at A and the rotor 5 is sealed on all sides by the vanes 1 and 2 and the top and bottom plates 3 and 4, the pressure drop is transmitted to the inside or back-side portion of the rotor 5.

The accelerated flow in the vicinity of area B generates a pressure gradient in the vicinity of the rotor 5 such that the blades of the rotor 5 furthest from vane 2 are positioned within the accelerated flow moving from left to right, while those blades closest to vane 2 are in the stalled flow or counter flow moving from right to left in the wake of vane 1 adjacent vane 2. The venturi pressure drop transmitted from area A draws the flow towards area A, which enhances the vortex and reduces the occurrence of vortex-shedding by stabilising the pattern of flow. The extension of vane 2 substantially downstream of the rotor 5, so that the vane 2 also acts as a fairing, serves to stabilise the vortex still further.

The axis of the rotor 5 is positioned close to the centre of the vortex in such a way that the accelerated flow in the region B impinges on the blades furthest from the vane 2. As can be seen from Figure 2, the gaps between the rotor 5 and the closest points on the vanes 1 and 2 are small. It is important that the gap between the rotor 5 and the vane 2 is kept small, for example, the size of the gap may be no more than 10% of the radius of the rotor 5, so that the counter flow back towards the gap at A is directed through the inside portion or nearside of the rotor 5 that is moving from right to left. An enhanced turning moment acts on the rotor 5 caused by the velocity gradient across the rotor 5 such that, as viewed from above as in Figure 2, the rotor 5 is caused to rotate in a counter-clockwise direction.

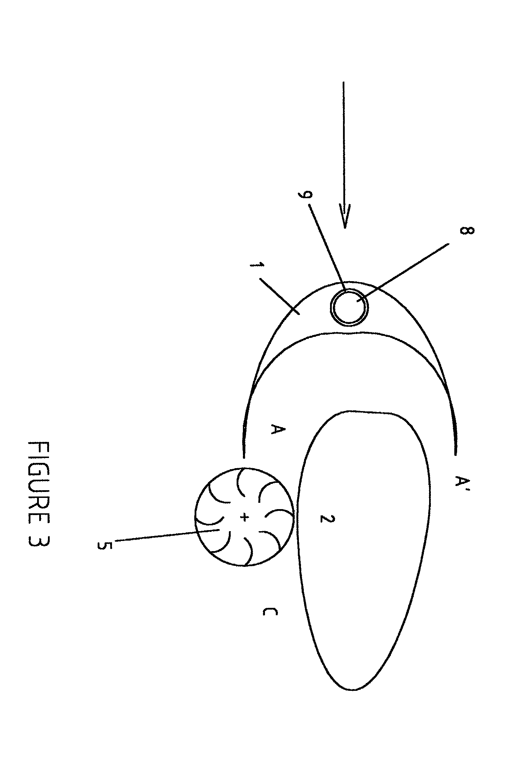

In the modification shown in the sectional drawing of Figure 3, the vanes 1 and 2 are extended on the side of the vane 1 opposite to the rotor 5 to present a more symmetrical shape to the flow such that the whole assembly will align itself better to the flow direction if allowed to swivel about an anchoring pivot 8 and a bearing 9. The top and bottom plates (not shown in Figure 3) will be similarly extended so that the closed passage between vanes 1 and 2 is also extended, linking area A', area A and the inside or nearside portion of the rotor 5. In this way, the drop in pressure generated in the vicinity of the area A' in the wake of the assembly caused by the accelerated flow past the lateral extremity of the vane 1 is transmitted to the inside or back-side portion of the rotor 5 as before, thereby enhancing the counter-flow and the velocity gradient across the rotor 5 in a similar manner to the arrangement shown in Figure 2.

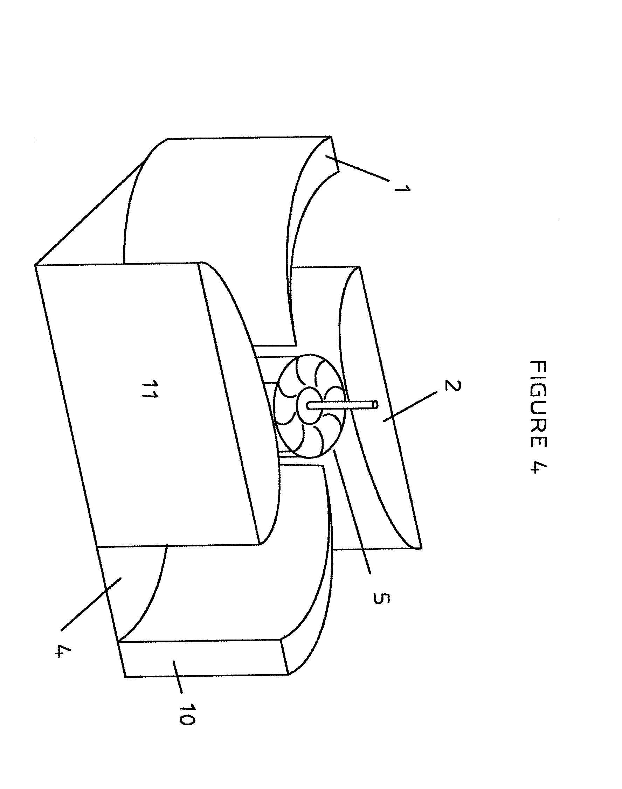

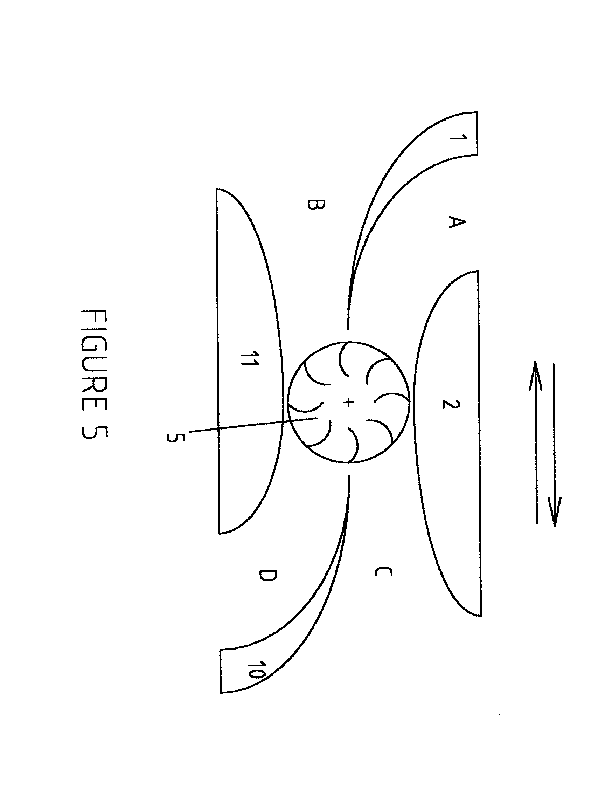

Figures 4 and 5 show a further form of turbine which, in this case, is designed to operate within a flow regime, such as that obtained in an estuary, in which the direction of flow is reversed as a result of tide changes.

Figure 4 is an isometric view of the turbine with the top plate 3 removed to show the internal passages within the turbine, while Figure 5 is a horizontal sectional view with the directions of flow indicated by the arrows.

The vanes 1 and 2 are as described above with reference to Figures 1A and 1B and are in the same locations relative to the rotor 5. Two extra vanes have been added as compared to the arrangement shown in Figures 1A and 1B. Vane 10 is identical to vane 1, except that it has been inverted, and vane 11 is the same as vane 2, except that it has similarly been inverted. Vanes 10 and 11 are in the same positions relative to one another and to the rotor 5 as the vanes 1 and 2, except that their orientation has been reversed, for a flow from the opposite direction.

If the flow is in a direction from left to right as viewed in Figure 5, i.e. as indicated in Figure 2, the flowing fluid divides at the most upstream extent of vane 1, such that part of the flow passes through area B and the rotor 5, while the remainder of the flow passes on the other side of the vane 1, past the gap A between the vanes 1 and 2. As the fluid passes the gap A between the vanes 1 and 2, it is accelerated causing a venturi pressure drop in the vicinity of area A which, as with the turbine shown in Figures 1A, 1B and 2, is transmitted to the backside portion of the rotor 5 so as to enhance the vortex in the vicinity of the rotor 5 by helping to draw the flow back towards the area A. When the flow is from left to right, substantially the whole of the flow to the rotor 5 is via the restricted inlet at area B, while the flow leaving the rotor 5 is relatively unrestricted and is shared between areas C and D.

If the fluid flow direction is reversed, so that it flows from right to left in Figure 5, substantially the whole of the flow to the rotor is via the restricted inlet at area C, where it becomes accelerated, while the flow leaving the rotor 5 is shared between areas A and B. A venturi pressure drop is generated in the vicinity of area D when the flow is from right to left, and this pressure drop is transmitted to the back side of the rotor 5, helping to draw the flow towards area D.

The flow upstream of the rotor 5 is thus substantially wholly through one zone or channel, i.e. area B or area C, regardless of the direction of flow of the fluid. In addition, the flow downstream of the rotor 5 is through two zones or channels, i.e. through areas C and D, or through areas A and B, again regardless of the direction of flow past the rotor 5.

In the arrangement shown in Figures 4 and 5, the vanes 1, 2, 10 and 11 are so arranged relative to the rotor as to afford a plane of symmetry perpendicular to the flow direction such that, when the flow direction is reversed, the vanes 1, 2, 10 and 11 continue to generate substantially the same flow pattern and velocity gradient in the reverse direction. The arrangement is also such that the turning moment on the rotor 5 is in the same direction as before.

Although the drawings show a single turbine assembly, it will be appreciated that a plurality of turbine assemblies can be mounted side-by-side, with the turbine assemblies arranged in a row extending in a direction at right angles to the direction of flow.

## Claims

1. A fluid flow turbine that includes a rotor, a first vane having at least a part thereof positioned in front of the rotor and having a tail extending towards the axis of the rotor and serving to direct the fluid so as to flow to one side of the axis of the rotor, and a second vane positioned on the other side of the rotor.

2. A turbine as claimed in Claim 1, in which the second vane extends downstream of the rotor and is so positioned that there is only a small gap between the periphery of the rotor and the part of the second vane closest to the rotor.

3. A turbine as claimed in either of the preceding claims, in which the first and second vanes are arranged so that they co-operate with the rotor to define flow passages designed to transmit the pressure differentials generated by the vanes to different parts of the rotor in order to enhance the turning moment acting on the rotor and trap the generated vortex within the vicinity of the rotor.

4. A turbine as claimed in any one of the preceding claims, which includes a plurality of vanes so arranged relative to the rotor that, regardless of the direction of flow past the rotor, the fluid pressure upstream of the rotor is increased and the pressure downstream of the rotor is decreased, the flow upstream of the rotor being substantially wholly through one zone or channel whereas the flow downstream of the rotor is through two zones or channels, again regardless of the direction of flow past the rotor.

5. A turbine as claimed in any one of the preceding claims, in which the vanes are so arranged relative to the rotor as to afford a plane of symmetry perpendicular to the flow direction such that, when the flow direction is reversed, the vanes continue to generate substantially the same flow pattern and velocity gradient in the reverse direction and such that the turning moment on the rotor is in the same direction as before.
